# EUROPÄISCHE PATENTSCHRIFT

(11) **EP 1 659 323 B1**
(45) Veröffentlichungstag und Bekanntmachung des Hinweises auf die Patenterteilung: **28.05.2008**
(21) Anmeldenummer: 05024060.5
(22) Anmeldetag: 04.11.2005
(51) Int. Cl.: F16K 47/02, F16K 11/078

(54) **Ventil für Sanitärarmaturen**
Valve for sanitary fittings
Vanne pour robinetterie sanitaire

(30) Priorität: 23.11.2004 DE 102004056565
(43) Veröffentlichungstag der Anmeldung: 24.05.2006
(73) Patentinhaber: Grohe AG, 58675 Hemer (DE)
(72) Erfinder: Pawelzik, Manfred, 59494 Soest (DE); Ruthmann, Mike, 58642 Iserlohn (DE)

(56) Entgegenhaltungen:
- DE-A1- 2 937 475
- DE-A1- 3 031 371
- DE-A1- 3 428 286
- DE-U1- 8 800 295

## Beschreibung

Die Erfindung betrifft ein Ventil für Sanitärarmaturen mit einer wenigstens eine Wassereinlassöffnung aufweisenden Ventilsitzscheibe und einer zur Ventilsitzscheibe verschiebbar angeordneten Steuerscheibe, die mit wenigstens einem als Durchbruch ausgebildeten Überströmkanal versehen ist und deren von der Ventilsitzscheibe abgekehrte Stirnseite von einer Abdeck- und Führungsscheibe gehalten ist, wobei im Überströmkanal im Bereich der Wandung wenigstens ein Körper zur Fließgeräuschminderung angeordnet ist.

Ein derartiges Ventil ist aus der deutschen Offenlegungsschrift DE 33 36 672 A1 bekannt. Zur Fließgeräuschminderung ist hierbei im Überströmkanal ein ringförmiger Siebkörper angeordnet. Mit einem derartigen Siebkörper können zwar die im Ventil entstehenden Fließgeräusche in erheblichem Maße verringert werden, er ist jedoch in der geforderten Formgenauigkeit nur aufwendig zu fertigen und somit relativ kostenträchtig in der Herstellung. Darüber hinaus lässt sich ein derartiger Siebkörper nur schwer in einem automatischen Montageprozess des Ventils integrieren.

Auch die DE 88 00 295 U1 offenbart ein Mischventil mit einem Geräusch mindernden Einsatz, der im Überströmkanal einer Steuereinheit bestehend aus einer Ventilsitzscheibe und einer beweglichen Steuerscheibe angeordnet ist. Der Einsatz besteht aus einem ringförmigen Element, das entlang der Umfangslinie mit Rippen versehen ist, die radial nach innen in den Einsatz hineinragen und sich im Wesentlichen parallel zum Wasserstrom erstrecken.

Auch aus der DE 30 31 371 A1 ist ein Mengenregulierventil bekannt, bei dem eine bewegliche Steuerscheibe mit einem Haltglied verbunden ist, an dem strahlenförmig schottartige Rippen ausgebildet sind, die den Wasserstrom in Teilströme zerlegen und umleiten sollen.

Weiterhin offenbart die DE 29 37 475 A1 eine Mischarmatur, bei der im Überströmkanal der Steuereinheit ein Anströmkörper eingesetzt ist. Der Anströmkörper weist eine Vielzahl paralleler Rippen auf, die sich flossenartig in den Überströmkanal erstrecken.

Der Erfindung liegt die Aufgabe zugrunde, dass im Oberbegriff des Anspruchs 1 angegebene Ventil weiter zu verbessern und insbesondere so auszubilden, dass die Einrichtung zur Fließgeräuschminderung kostengünstig erstellt werden kann.

Diese Aufgabe wird bei einem gattungsgemäßen Ventil dadurch gelöst, dass der Körper Stäbe aufweist, die mit geringem Abstand zur Ventilsitzscheibe angeordnet sind, wobei die Stäbe ihrer Länge nach parallel zur Gleitfläche der Ventilsitzscheibe und radial in den Überströmkanal gerichtet sind.

Weitere Ausgestaltungen der Erfindung sind in den Ansprüchen 2 bis 21 angegeben.

Mit den vorgeschlagenen Maßnahmen wird insbesondere erreicht, dass mit den erfindungsgemäßen Stäben eine unerwartet hohe Fließgeräuschminderung im Ventil erwirkt werden kann. Außerdem sind die Stäbe relativ einfach und kostengünstig herstellbar und können auch im wesentlichen störungsfrei automatisch montiert werden.

Die vorgeschlagenen Maßnahmen zur Fließgeräuschminderung können sowohl bei einem Wassermischventil und/oder Wassermengendosierventil als auch bei einem Umschaltventil eingesetzt werden.

In weiterer Ausgestaltung der Erfindung können die Stäbe zweckmäßig mit einem um 90° gebogenen Abschnitt versehen sein, mit dem sie an einer Abdeck- und Führungsscheibe oder an einem separaten Ringelement befestigt werden. Das Ringelement kann hierbei spielfrei an der Wandung des Überströmkanals angelagert werden, wobei die Axialsicherung in der Stecklage im Überströmkanal von zwei am Ringelement radial vorstehenden Lappen erfolgen, die einerseits die Eintauchtiefe in den Überströmkanal begrenzen und andererseits mit Hilfe der Abdeck- und Führungsscheibe eine axiale Sicherung in der Stecklage bewirken.

Als zweckmäßig hat sich erwiesen, wenn die Stäbe mit einem Abstand zueinander angeordnet werden, der etwa das 0,5-fache bis 1,5-fache der Breite der Stäbe aufweist. Die Länge der Stäbe kann vorteilhaft etwa das 0,3-fache bis 0,7-fache der Breite der Einlassöffnung in der Ventilsitzscheibe aufweisen.

Als günstig hat sich erwiesen, wenn die Stäbe einen kreisförmigen Querschnitt haben und einen Durchmesser von 0,2mm bis 0,8mm aufweisen.

Zweckmäßig kann auch an den erfindungsgemäßen Stäben an den in den Überströmkanal vorstehenden Enden jeweils ein um 90° in Fließrichtung des Wassers gebogener Endabschnitt vorgesehen sein. Die Länge des Endabschnitts kann dabei etwa der Länge des parallel zur Ventilsitzscheibe angeordneten Stabes entsprechen.

In Weiterbildung der Erfindung können die einzelnen Stäbe mit einem Quersteg verbunden werden, der etwa die gleiche Querschnittsfläche aufweist wie die Stäbe.

Außerdem können auch die Endabschnitte der Stäbe mit einem umlaufenden Steg verbunden sein, wobei auch die Querschnittsfläche des Stegs etwa der Querschnittsfläche des Endabschnittes entspricht.

In einer bevorzugten Ausbildung der Erfindung bei einem Wassermischventil und Mengendosierventil mit je einer auf einem Kreisbogen angeordneten ringausschnittförmigen Einlassöffnung für Kalt- und Heißwasser, wodurch mit der Steuerscheibe durch eine Drehbewegung das Mischungsverhältnis bzw. die Mischwassertemperatur und mit einer Radialbewegung die Gesamtdurchflussmenge bestimmbar ist, kann vorteilhaft ein Flachstück zwischen den Stäben angeordnet werden, dessen Breite gleich groß oder größer als der Abstand zwischen den beiden Einlassöffnungen ist. Hierdurch wird neben der Fließgeräuschminderung erreicht, dass bei entsprechender Platzierung eine komfortable und genaue Einstellung der meist benötigten Mischwassertemperatur von 30° Celsius bis 45° Celsius ermöglicht wird. Durch die Anordnung des Flachstücks wird der Schwenkwinkel für die Einstellung der bevorzugten Mischwassertemperatur vergrößert, während er im Heißwasser und Kaltwasserbereich verringert wird.

Die Dicke des Flachstücks kann dabei dem Durchmesser der Stäbe entsprechen, wobei die Seitenflächen des Flachstücks entsprechend verrundet ausgebildet werden können.

Am äußeren Endbereich des Flachstücks kann ebenfalls ein um 90° gebogener Abschnitt vorgesehen werden, mit dem er an dem Ringelement oder an der Abdeckung der Führungsscheibe befestigt ist. Darüber hinaus kann das Flachstück am radial vorstehenden Ende einen um 90° gebogenen Endabschnitt mit gleichem Querschnitt aufweisen.

Sowohl die Flachstücke und/oder die Stäbe können kostengünstig einstückig mit dem Ringelement aus Kunststoff hergestellt werden.

Ausführungsbeispiele der Erfindung sind in der Zeichnung dargestellt und werden im Folgenden näher beschrieben. Es zeigt in der Zeichnung
- Figur 1: ein Misch- und Mengendosierventil im Längsschnitt, wie es in Sanitärarmaturen eingesetzt wird, in der Schnittebene I der Figur 2;
- Figur 2: das in Figur 1 dargestellte Ventil in der Schnittebene II;
- Figur 3: die in Figur 1 gezeigte Steuerscheibe in Ansicht von oben;
- Figur 4: die in Figur 1 gezeigte ventilsitzscheibe in Ansicht von oben;
- Figur 5: ein im Überströmkanal der Steuerscheibe anzuordnendes Ringelement in vergrößerter Darstellung, in Ansicht von unten;
- Figur 6: das in Figur 5 gezeigte Ringelement in der Schnittebene VI;
- Figur 7: das in Figur 6 gezeigte Ringelement in Perspektivdarstellung;
- Figur 8: ein anderes Ringelement in Ansicht von unten;
- Figur 9: das in Figur 8 dargestellte Ringelement in der Schnittebenen IX;
- Figur 10: das in Figur 9 gezeigte Ringelement in Perspektivansicht;
- Figur 11: ein anderes Ausführungsbeispiel einer Führungs- und Abdeckscheibe in Ansicht von unten, wobei die fließgeräuschmindernden Stäbe einstückig an der Führungs- und Abdeckscheibe ausgebildet sind;
- Figur 12: die in Figur 11 gezeigte Abdeck- und Führungsscheibe in der Schnittebene XII;
- Figur 13: die in Figur 11 gezeigte Abdeck- und Führungsscheibe in der Schnittebene XIII.

Der Einfachheit halber sind bei den Ausführungsbeispielen in der Zeichnung gleiche oder entsprechende Elemente mit jeweils gleichen Bezugszeichen versehen.

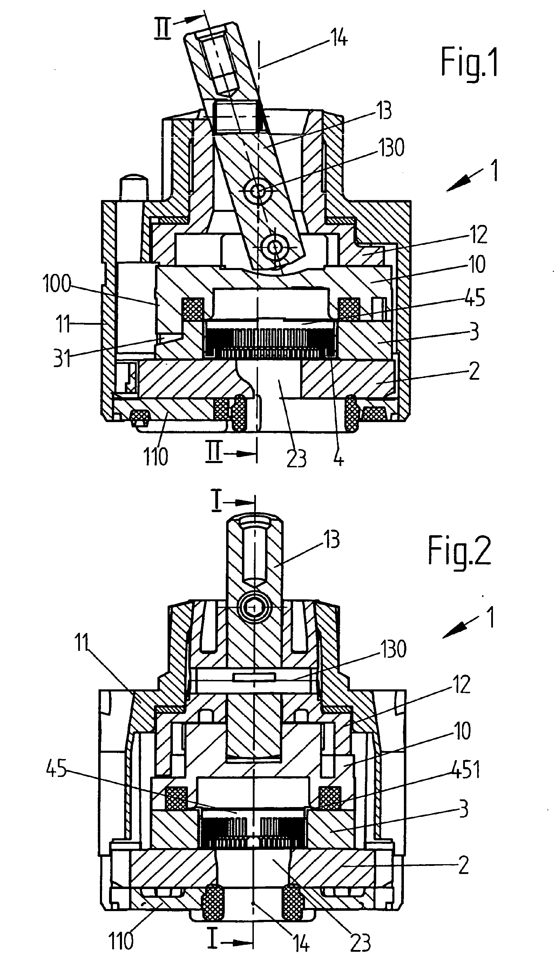

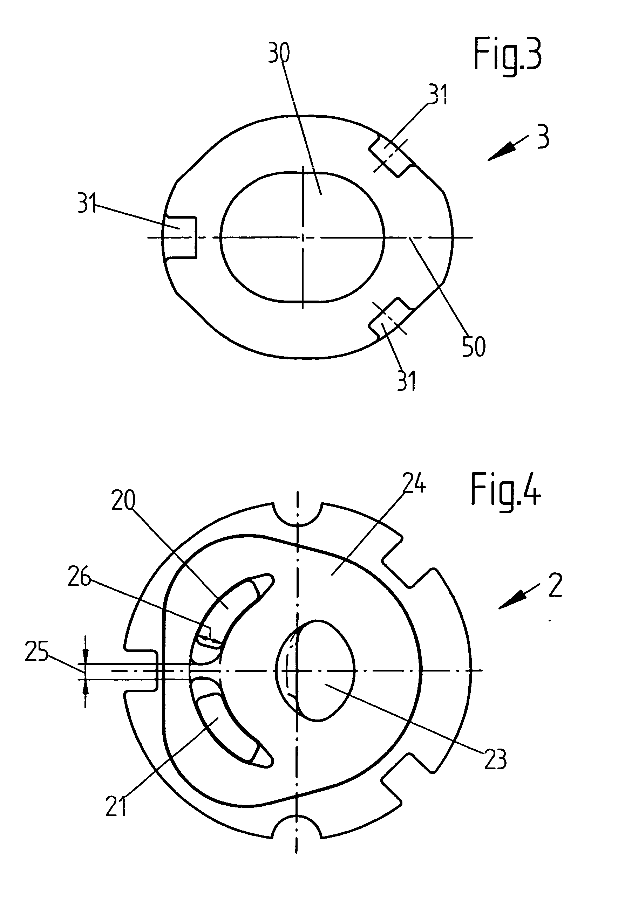

In Figur 1 und 2 der Zeichnung ist ein Wassermischventil und Wassermengendosierventil dargestellt, welches als Baueinheit oder Ventilkartusche 1 in einer nicht dargestellten Sanitärarmatur angeordnet werden kann. Die Ventilelemente sind in einem gestuft zylindrisch ausgebildeten Ventilkartuschengehäuse 11 angeordnet, welches am erweiterten Endbereich mit einem Boden 110 verschlossen ist. Im Boden 110 sind separate Zuflussöffnungen für Kalt- und Heißwasser sowie eine Abflussöffnung für das von dem Mischventil abgegebene Wasser ausgebildet. An der Innenseite des Bodens 110 ist eine Ventilsitzscheibe 2 ortsfest in dem Ventilkartuschengehäuse 11 gehalten. Die Ventilsitzscheibe 2 hat auf einem Kreisbogen eine ringabschnittförmige Einlassöffnung 20 für Kaltwasser und eine ringabschnittförmige Einlassöffnung 21 für Heißwasser, wie es insbesondere aus Figur 4 der Zeichnung zu entnehmen ist. Außerdem ist im Zentrum eine Auslassöffnung 23 ausgebildet. Die Einlassöffnungen 20, 21 und die Auslassöffnung 23 sind gedichtet mit den Öffnungen im Boden 110 verbunden und werden mit dem Einbau in einer Sanitärarmatur an den dort vorhandenen Wasserkanälen angeschlossen. Die Ventilsitzscheibe 2 ist aus Hartstoff hergestellt und hat eine feinst bearbeitete Gleitfläche 24. An der Gleitfläche 24 ist eine Steuerscheibe 3 verschiebbar angelagert. Die Steuerscheibe 3 ist ebenfalls aus Hartstoff hergestellt und liegt mit einer feinst bearbeiteten Fläche an der Gleitfläche 24 wasserdicht an. In der Steuerscheibe 3 ist als Durchbruch ein Überströmkanal 30 ausgebildet, der so dimensioniert ist, dass die Einlassöffnungen 20, 21 von der Steuerscheibe verschließbar sind oder in Abhängigkeit von einer Dreh- oder Radialbewegung mit der Auslassöffnung 23 verbindbar sind.

An der zur Ventilsitzscheibe 2 gegenüberliegenden Seite der Steuerscheibe 3 ist eine Abdeck- und Führungsscheibe 10 gedichtet angelagert, wobei in der Stecklage Zapfen 100 in entsprechende Ausnehmungen 31 der Steuerscheibe 3 einfassen und eine formschlüssige Verbindung zwischen der Abdeck- und Führungsscheibe 10 und der Steuerscheibe 3 herstellen. An der gegenüberliegenden Stirnseite ist die Abdeck- und Führungsscheibe 10 an einer drehbar im Ventilkartuschengehäuse 11 angeordneten Buchse 12 angelagert. In der Buchse 12 ist ein Stellhebel 13 auf einer Schwenkachse 130 vorgesehen. Die Schwenkachse 130 ist dabei senkrecht zur Mittelachse 14 der Buchse 12 angeordnet. Mit seinem inneren Hebelarm ist der Stellhebel 13 an der Abdeck- und Führungsscheibe 10 angelenkt. Am äußeren, aus dem Ventilkartuschengehäuse 11 vorstehenden Hebelarm kann ein in der Zeichnung nicht dargestellter Handgriff befestigt werden. Mit einer Drehbewegung des Stellhebels 13 um die Mittelachse 14 kann die Steuerscheibe 3 entsprechend gedreht werden, so dass mit der Drehbewegung das Mischungsverhältnis bzw. die Mischwassertemperatur einstellbar ist. Mit einer Schenkbewegung des Stellhebels 13 um die Schwenkachse 130 wird dagegen die Steuerscheibe 3 radial zur Ventilsitzscheibe 2 verschoben, so dass mit dieser Bewegung die Gesamtdurchflussmenge einstellbar ist.

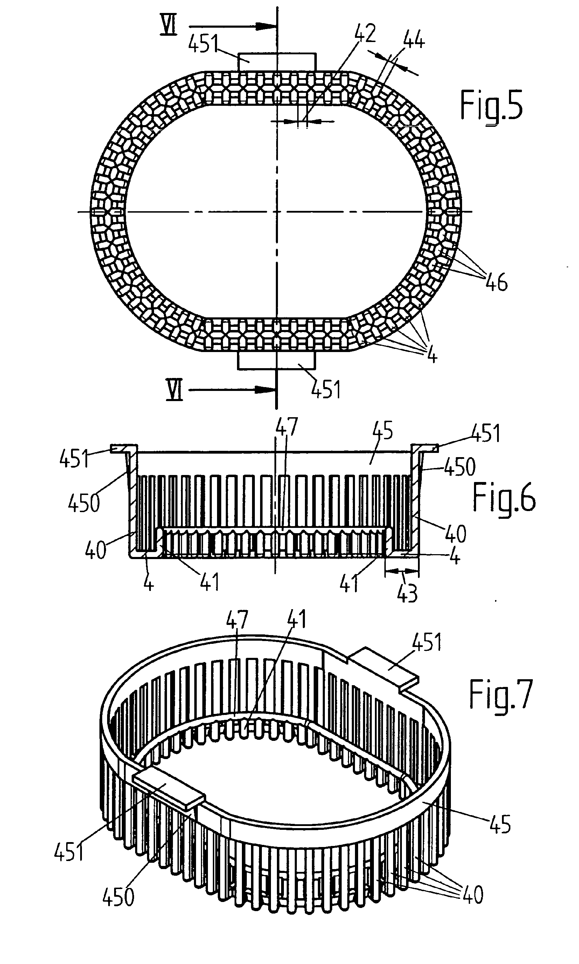

Zur Fließgeräuschminderung ist in dem Überströmkanal 30 ein Ringelement 45 angeordnet, wie es insbesondere aus Figur 5 bis 7 der Zeichnung zu entnehmen ist. An dem Ringelement 45 werden mit geringem Abstand und parallel zur Gleitfläche 24 angeordnete Stäbe 4 gehalten. Die Stäbe 4 sind dabei mit einem um 90° gebogenem Abschnitt 40 an dem aus Kunststoff hergestellten Ringelement 45 angeformt. An dem nach innen in den Überströmkanal 30 der Steuerscheibe 3 vorstehenden Endbereich der Stäbe 4 ist jeweils ein um 90° gebogener, etwa in Fließrichtung des Wassers sich erstreckender Endabschnitt 41 ausgebildet. Die sich etwa radial in den Überströmkanal 30 erstreckenden Stäbe 4 weisen einen Abstand 42 zueinander auf, der etwa der 0,5-fachen bis 1,5-fachen Breite 44 der Stäbe 4 entspricht. Als günstig hat sich erwiesen, wenn der Abstand 42 etwa der Breite 44 der Stäbe 4 entspricht. Dabei haben die Stäbe 4 eine Länge 43, die etwa dem 0,5-fachen einer maximalen Breite 26 der Einlassöffnungen 20, 21 entspricht. Die Länge 43 kann aber etwa zwischen dem 0,3-fachen bis 0,7-fachen der Breite 26 der Einlassöffnungen 20, 21 variiert werden. Die Stäbe 4 sind dabei im Querschnitt kreisförmig ausgebildet und haben einen Durchmesser im Bereich von 0,2mm bis 0,8mm, vorzugsweise 0,4mm.

Am Außenmantel des Ringelements 45 sind radial vorstehende keilförmige Erhebungen 450 angeformt, damit das Ringelement 45 spielfrei im Überströmkanal 30 angeordnet werden kann. Außerdem sind an der vorstehenden Stirnseite des Ringelements 45 zwei gegenüberliegend angeordnete radial nach außen vorstehende Lappen 451 angeformt. Die Lappen 451 bestimmen einerseits beim Einbau die Eintauchtiefe der Stäbe 4 in den Überströmkanal 30 und sichern nach dem Einbau der Abdeck- und Führungsscheibe 10 die Axialposition im Überströmkanal 30.

Die Stäbe 4 sind etwa im mittleren Bereich durch Querstege 46 miteinander verbunden, wie es insbesondere aus Figur 5 der Zeichnung zu entnehmen ist. Die Querstege 46 haben etwa die gleiche Querschnittsfläche wie die Stäbe 4. Außerdem ist am Endabschnitt 41 ein weiterer umlaufender Steg 47 angeformt, wie es insbesondere aus Figur 6 und 7 der Zeichnung zu entnehmen ist. Die Querschnittsfläche des Stegs 47 entspricht dabei der Querschnittsfläche der Endabschnitte 41.

Die Herstellung des Ringelements 45 mit den Stäben 4, den Querstegen 46 und dem umlaufenden Steg 47 kann kostengünstig einstückig aus Kunststoff im Spritzgießverfahren erfolgen.

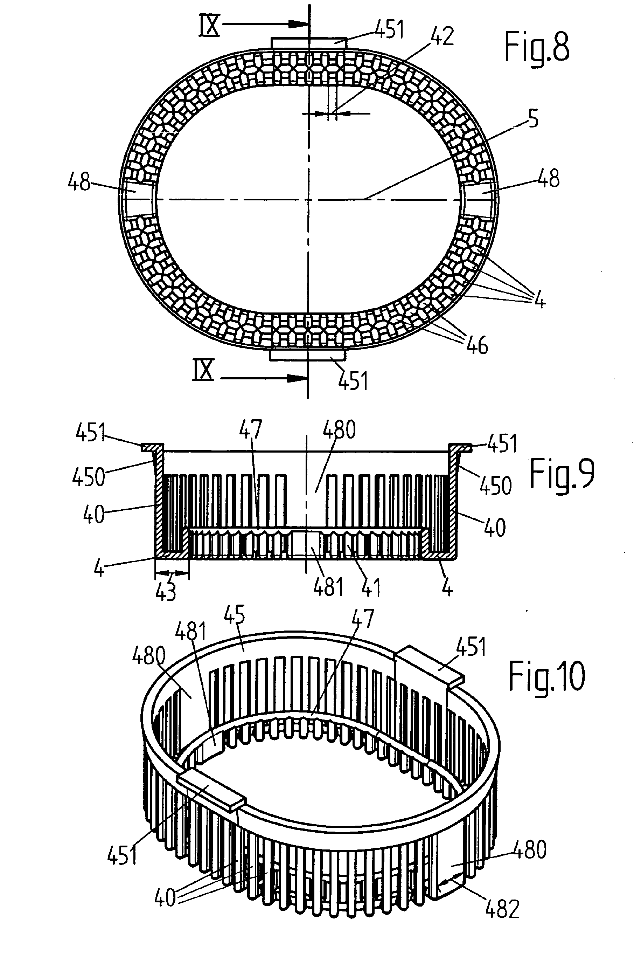

In Figur 8 bis 10 der Zeichnung ist ein abgewandeltes Ringelement 45 dargestellt, wobei die Außenabmessungen entsprechend dem vorstehend beschriebenen Ausführungsbeispiel sind, so dass das Ringelement in das in Figur 1 und 2 gezeigte Ventil eingesetzt werden kann.

Auf einer Symmetrieachse 5 sind hierbei zwischen den Stäben 4 zwei gegenüberliegende Flachstücke 48 angeordnet. Das Flachstück 48 hat jeweils eine Breite 482, die gleich groß oder größer ist als ein nächstgelegener Abstand 25 der beiden Einlassöffnungen 20, 21 der Ventilsitzscheibe 2 ist. Die Symmetrieachse 5 deckt sich mit einer Symmetrieachse 50 der Steuerscheibe 3. In der mittleren Drehstellung der Steuerscheibe 3 zur Ventilsitzscheibe 2 gelangt somit beim Öffnungsvorgang, d. h. beim radialen Verschieben, eines der beiden Flachstücke 48 in den Bereich des Abstands 25 zwischen den beiden Einlassöffnungen 20, 21 der Ventilsitzscheibe 2. Beim Einstellen der Mischwassertemperatur im Bereich von 30° Celsius bis 45° Celsius wirkt das Flachstück 48 jedoch als Durchflussdrossel, so dass der Schwenkwinkel, bezogen auf die Änderung der Mischwassertemperatur in diesem Bereich vergrößert ist, während die Änderung der Mischwassertemperatur im Heißwasser- oder Kaltwasserbereich bezogen auf den Drehwinkel vergrößert ist.

Die zweifache Anordnung der Flachstücke 48 ermöglicht den Einsatz des Ringelements 45 in der Ventilsitzscheibe in um 180° gedrehte Drehstellungen.

Die Flachstücke 48 weisen eine Dicke auf, die dem Durchmesser der Stäbe 4 entspricht. Die Seitenflächen der Flachstücke 48 sind entsprechend der Stäbe 4 verrundet ausgebildet.

Entsprechend den Stäben 4 sind auch die Flachstücke 48 jeweils mit einem um 90° gebogenen Abschnitt 480 für die Verbindung mit dem Ringelement 45 und einem Endabschnitt 481 zur Verbindung mit dem umlaufenden Steg 47 versehen. Die Querschnittsfläche des Abschnitts 480 und des Endabschnitts 481 entspricht der Querschnittsfläche des Flachstücks 48.

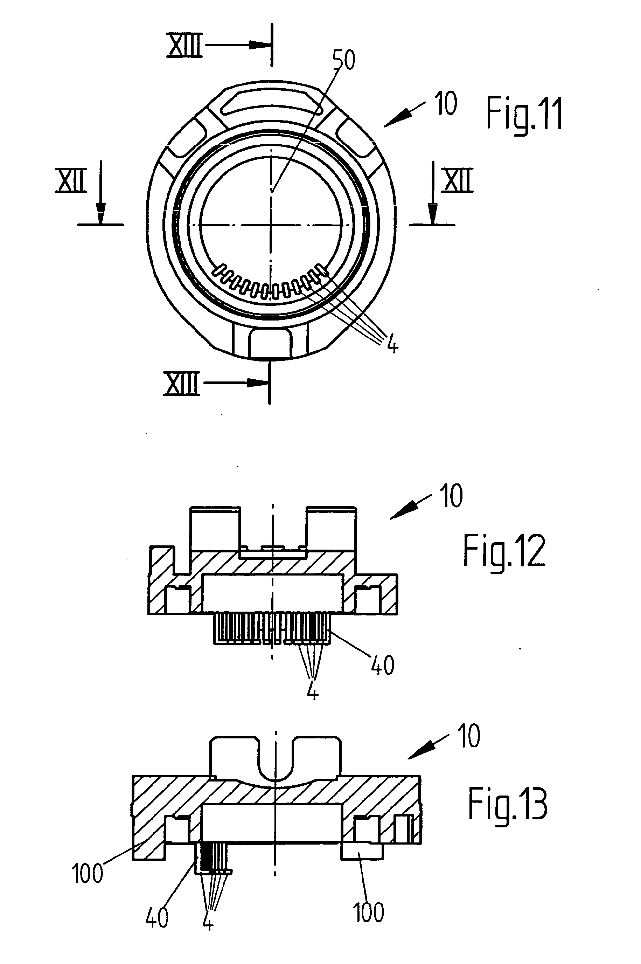

In Figur 11 bis 13 der Zeichnung ist ein anderes Ausführungsbeispiel einer Führungs- und Abdeckscheibe dargestellt, deren Außenabmessungen den Abmessungen der in Figur 1 und 2 dargestellten Abdeck- und Führungsscheibe 10 entsprechen. Anstatt eines separaten Ringelements 45 sind bei dieser Ausbildung die Stäbe 4 einstückig an der Abdeck- und Führungsscheibe 10 ausgebildet. Die Stäbe 4 weisen hierbei jedoch sowohl keinen Endabschnitt als auch keinen Quersteg auf und sind lediglich mit einem Abschnitt 40 an der Abdeck- und Führungsscheibe 10 gehalten. Die Stäbe 4 befinden sich lediglich im Bereich der Einlassöffnungen 20, 21. Im übrigen entsprechen die Abmessungen den vorstehend beschriebenen Ausführungsbeispielen. Die Abdeck- und Führungsscheibe 10 ist einstückig mit den Stäben 4 aus Kunststoff im Spritzgießverfahren hergestellt.

Die vorstehend beschriebenen Ausführungsbeispiele betreffen ein Wassermischventil mit Mengendosierung. Selbstverständlich können die Stäbe 4 auch bei einem Mengendosierventil und/oder einem Umschaltventil zur Fließgeräuschminderung eingesetzt werden.

## Patentansprüche

1. Ventil für Sanitärarmaturen
- mit einer wenigstens eine Wassereinlassöffnung aufweisenden Ventilsitzscheibe (2) und
- einer zur Ventilsitzscheibe (2) verschiebbar angeordneten Steuerscheibe (3),
- - die mit wenigstens einem als Durchbruch ausgebildeten Überströmkanal (30) versehen ist und
- - deren von der Ventilsitzscheibe (2) abgekehrte Stirnseite von einer Abdeck- und Führungsscheibe (10) gehalten ist,
- wobei im Überströmkanal (30) im Bereich der Wandung wenigstens ein Körper zur Fließgeräuschminderung angeordnet ist,
**dadurch gekennzeichnet, dass**
- der Körper Stäbe (4) aufweist,
- - die mit geringem Abstand zur Ventilsitzscheibe (2) angeordnet sind,
- - wobei die Stäbe (4) ihrer Länge (43) nach parallel zur Gleitfläche (24) der Ventilsitzscheibe (2) und radial in den Überströmkanal (30) gerichtet sind.

2. Ventil, nach Anspruch 1, **dadurch gekennzeichnet, dass** die Stäbe (4) im Bereich der Wandung des Überströmkanals (30) einen um 90° gebogenen Abschnitt (40) aufweisen, mit dem sie befestigt sind.

3. Ventil nach Anspruch 1 oder 2, **dadurch gekennzeichnet, dass** der Abstand (42) der Stäbe (4) zueinander dem 0,5-fachen bis 1,5-fachen der Breite (44) der Stäbe (4) entspricht.

4. Ventil nach wenigstens einem der vorhergehenden Ansprüche, **dadurch gekennzeichnet, dass** die Stäbe (4) eine Länge (43) aufweisen, die dem 0,3-fachen bis 0,7-fachen einer maximalen Breite (26) der Einlassöffnungen (20, 21) in der Ventilsitzscheibe (2) entspricht.

5. Ventil nach wenigstens einem der vorhergehenden Ansprüche, **dadurch gekennzeichnet, dass** die Stäbe (4) einen Durchmesser von 0,2mm bis 0,8mm aufweisen.

6. Ventil nach wenigstens einem der Ansprüche 2 bis 5, **dadurch gekennzeichnet, dass** die Stäbe (4) jeweils mit einem Abschnitt (40) einstückig mit der Abdeck- und Führungsscheibe (10) verbunden sind.

7. Ventil nach wenigstens einem der Ansprüche 2 bis 5, **dadurch gekennzeichnet, dass** die Stäbe (4) mit dem Abschnitt (40) jeweils einstückig mit einem Ringelement (45) verbunden sind, wobei das Ringelement (45) an der Wandung des Überströmkanals (30) anliegt.

8. Ventil nach Anspruch 7, **dadurch gekennzeichnet, dass** am Außenmantel des Ringelements (45) radial vorstehende keilförmige Erhebungen (450) angeformt sind, so dass eine spielfreie Halterung im Überströmkanal (30) gewährleistet ist.

9. Ventil nach Anspruch 7 oder 8, **dadurch gekennzeichnet, dass** an der oberen Stirnseite des Ringelements (450) wenigstens zwei gegenüberliegend angeordnete, radial nach außen vorstehende Lappen (451) angeformt sind, die die Eintauchtiefe in dem Überströmkanal (30) bestimmen und die in der Einbaulage von der Abdeck- und Führungsscheibe (10) axial gesichert sind.

10. Ventil nach wenigstens einem der vorhergehenden Ansprüche, **dadurch gekennzeichnet, dass** an dem in den Überströmkanal (30) vorstehenden Ende der Stäbe (4) jeweils ein um 90° in Fließrichtung des Wassers gebogener Endabschnitt (41) ausgebildet ist.

11. Ventil nach Anspruch 10, **dadurch gekennzeichnet, dass** der Endabschnitt (41) eine Länge aufweist, die der Länge (43) des Stabes (4) entspricht.

12. Ventil nach wenigstens einem der vorhergehenden Ansprüche, **dadurch gekennzeichnet, dass** die einzelnen Stäbe (4) mit einem Quersteg (46) verbunden sind.

13. Ventil nach Anspruch 12, **dadurch gekennzeichnet, dass** der Quersteg (46) eine zu dem Stab (4) entsprechend ausgebildete Querschnittsfläche aufweist.

14. Ventil nach wenigstens einem der vorhergehenden Ansprüche 10-33, **dadurch gekennzeichnet, dass** die Endabschnitte (41) mit einem umlaufenden Steg (47) verbunden sind.

15. Ventil nach Anspruch 14, **dadurch gekennzeichnet, dass** die Querschnittsfläche des Stegs (47) der Querschnittsfläche der Endabschnitte (41) entspricht.

16. Ventil nach wenigstens einem der vorhergehenden Ansprüche, wobei die Ventilsitzscheibe je eine auf einem Kreisbogen angeordnete ringabschnittsförmige Einlassöffnung für Kalt- und Heißwasser aufweist, wodurch mit der Steuerscheibe durch eine Drehbewegung das Mischungsverhältnis von Kalt- und Heißwasser und mit einer Radialbewegung die Gesamtdurchflussmenge bestimmbar ist, **dadurch gekennzeichnet, dass** in der Drehstellung der Steuerscheibe (3), in der die Öffnungsquerschnitte der beiden Einlassöffnungen (20, 21) zum Überströmkanal (30) gleich groß sind, zwischen den Stäben (4) im Bereich eines nächstgelegenen Abstands (25) der beiden Einlassöffnungen (20, 21) ein Flachstück (48) angeordnet ist, dessen Breite (482) größer oder gleich groß, als der Abstand (25) der beiden Einlassöffnungen (20, 21) ist.

17. Ventil nach Anspruch 16, **dadurch gekennzeichnet, dass** zwei auf einer Symmetrieachse (5) angeordnete gegenüber liegende Flachstücke (48) vorgesehen sind.

18. Ventil nach Anspruch 16 oder 17, **dadurch gekennzeichnet, dass** die Dicke des Flachstücks (48) dem Durchmesser der Stäbe (4) entspricht und die Seitenflächen mit dem gleichen Radius verrundet ausgebildet sind.

19. Ventil nach einem der Ansprüche 16 bis 18, **dadurch gekennzeichnet, dass** am äußeren Endbereich des Flachstücks (48) ein um 90° gebogener Abschnitt (480) mit gleicher Querschnittsfläche vorgesehen ist, mit dem das Flachstück (48) am Ringelement (45) befestigt ist.

20. Ventil nach einem der Ansprüche 16 bis 19, **dadurch gekennzeichnet, dass** am radial vorstehenden Ende des Flachstücks (48) ein um 90° gebogener Endabschnitt (481) mit gleicher Querschnittsfläche ausgebildet ist.

21. Ventil nach wenigstens einem der vorhergehenden Ansprüche, **dadurch gekennzeichnet, dass** die Flachstücke (48) mit den Abschnitten (480) und den Endabschnitten (481) und/oder die Stäbe (4) mit den Abschnitten (40) und den Endabschnitten (41) einstückig mit dem Ringelement (45) aus Kunststoff hergestellt sind.

## Claims

1. Valve for sanitary fittings
- with a valve seat disc (2) having at least one water-inlet opening and
- a control disc (3) arranged so as to be displaceable relative to the valve seat disc (2),
- - which control disc is provided with at least one overflow channel (30) in the form of an opening and
- - the face of which remote from the valve seat disc (2) is held by a covering and guiding disc (10),
- there being arranged in the overflow channel (30), in the region of the wall, at least one body for reducing flow noise,
**characterized in that**
- the body has rods (4),
- - which are arranged spaced a short distance apart from the valve seat disc (2),
- - the rods (4) being aligned, with respect to their length (43), parallel to the slide face (24) of the valve seat disc (2) and radially into the overflow channel (30).

2. Valve according to claim 1, **characterized in that** the rods (4) have, in the region of the wall of the overflow channel (30), a portion (40) bent through 90° by means of which they are mounted.

3. Valve according to claim 1 or 2, **characterized in that** the spacing (42) of the rods (4) from one another corresponds to from 0.5 to 1.5 times the width (44) of the rods (4).

4. Valve according to at least one of the preceding claims, **characterized in that** the length (43) of the rods (4) corresponds to from 0.3 to 0.7 times the maximum width (26) of the inlet openings (20, 21) in the valve seat disc (2).

5. Valve according to at least one of the preceding claims, **characterized in that** the diameter of the rods (4) is from 0.2 mm to 0.8 mm.

6. Valve according to at least one of claims 2 to 5, **characterized in that** the rods (4) are each integrally joined by means of a portion (40) to the covering and guiding disc (10).

7. Valve according to at least one of claims 2 to 5, **characterized in that** the rods (4), by means of the portion (40), are each integrally joined to a ring element (45), the ring element (45) resting against the wall of the overflow channel (30).

8. Valve according to claim 7, **characterized in that** there are formed on the outer wall of the ring element (45) radially projecting wedge-shaped projections (450), so that play-free mounting in the overflow channel (30) is ensured.

9. Valve according to claim 7 or 8, **characterized in that** on the upper end face of the ring element (450) there are formed, arranged opposite one another, at least two radially outwardly projecting tabs (451) which determine the depth of immersion in the overflow channel (30) and which are axially secured in the installed position by the covering and guiding disc (10).

10. Valve according to at least one of the preceding claims, **characterized in that** on the end of each of the rods (4) that projects into the overflow channel (30) there is formed an end portion (41) bent through 90° in the direction of flow of the water.

11. Valve according to claim 10, **characterized in that** the length of the end portion (41) corresponds to the length (43) of the rod (4).

12. Valve according to at least one of the preceding claims, **characterized in that** the individual rods (4) are joined to a cross-rib (46).

13. Valve according to claim 12, **characterized in that** the cross-rib (46) has a cross-section corresponding to the rod (4).

14. Valve according to at least one of the preceding claims 10 to 13, **characterized in that** the end portions (41) are joined to a circumferential rib (47).

15. Valve according to claim 14, **characterized in that** the cross-section of the rib (47) corresponds to the cross-section of the end portions (41).

16. Valve according to at least one of the preceding claims, the valve seat disc having for cold water and for hot water an inlet opening in the shape of a portion of a ring arranged on an arc of a circle, with the result that with the control disc the mixing ratio of cold and hot water is determinable by a rotational movement and the total amount of flow is determinable by a radial movement, **characterized in that**, in the rotated position of the control disc (3) in which the opening cross-sections of the two inlet openings (20, 21) to the overflow channel (30) are of equal size, between the rods (4) in the region of the closest distance (25) between the two inlet openings (20, 21) there is arranged a flat piece (48) the width (482) of which is greater than or the same as the distance (25) between the two inlet openings (20, 21).

17. Valve according to claim 16, **characterized in that** there are provided two flat pieces (48) arranged opposite one another on an axis of symmetry (5).

18. Valve according to claim 16 or 17, **characterized in that** the thickness of the flat piece (48) corresponds to the diameter of the rods (4) and the side faces are rounded with the same radius.

19. Valve according to any one of claims 16 to 18, **characterized in that** on the outer end region of the flat piece (48) there is provided a portion (480) bent through 90° which has the same cross-section, by means of which the flat piece (48) is attached to the ring element (45).

20. Valve according to any one of claims 16 to 19, **characterized in that** on the radially projecting end of the flat piece (48) there is formed an end portion (481) bent through 90° which has the same cross-section.

21. Valve according to at least one of the preceding claims, **characterized in that** the flat pieces (48) with the portions (480) and the end portions (481) and/or the rods (4) with the portions (40) and the end portions (41) are produced in one piece with the ring element (45) from plastics material.

## Revendications

1. Vanne pour robinetterie sanitaire comprenant :
- un disque formant siège de vanne (2) ayant au moins un orifice d'entrée d'eau et
- un disque de commande (3) monté coulissant par rapport au disque formant siège de vanne (2),
* ayant au moins un canal de passage (30) formé comme orifice traversant et
* dont la face frontale non tournée vers le disque formant siège de vanne (2) est tenue par un disque de couverture et de guidage (10),
- au moins un organe d'amortissement de bruit de circulation étant prévu dans le canal de passage (30) au niveau de la paroi,
**caractérisée en ce que**
- l'organe comporte des tiges (4),
* à faible distance du disque formant siège de vanne (2),
* les tiges (4) étant orientées par leur longueur (43) parallèlement à la surface de glissement (24) du disque formant siège de vanne (2) et radialement dans le canal de passage (30).

2. Vanne selon la revendication 1,
**caractérisée en ce que**
dans la région de la paroi du canal de passage (3), les tiges (4) ont un segment (40) recourbé à 90° par lequel elles sont fixées.

3. Vanne selon la revendication 1 ou 2,
**caractérisée en ce que**
la distance (42) entre les tiges (4) correspond à 0,5 fois jusqu'à 1,5 fois la largeur (44) des tiges (4).

4. Vanne selon au moins l'une des revendications précédentes,
**caractérisée en ce que**
les tiges (4) ont une longueur (43) qui correspond à 0,3 fois jusqu'à 0,7 fois la largeur maximale (26) des orifices d'entrée (20, 21) du disque formant siège de vanne (2).

5. Vanne selon au moins l'une des revendications précédentes,
**caractérisée en ce que**
les tiges (4) ont un diamètre mesurant de 0,2 mm jusqu'à 0,8 mm.

6. Vanne selon au moins l'une des revendications 2 à 5,
**caractérisée en ce que**
les tiges (4) sont reliées respectivement par un segment (40) en une seule pièce du disque de couverture et de guidage (10).

7. Vanne selon au moins l'une des revendications 2 à 5,
**caractérisée en ce que**
les tiges (4) sont reliées en une seule pièce par le segment (40) à un élément annulaire (45), ce dernier s'appliquant contre la paroi du canal de passage (30).

8. Vanne selon la revendication 7,
**caractérisée en ce que**
l'enveloppe extérieure de l'élément annulaire (45) comporte des bossages (450) en forme de coin, venant radialement en saillie pour assurer un maintien sans jeu dans le canal de passage (30).

9. Vanne selon les revendications 7 ou 8,
**caractérisée en ce que**
la face frontale supérieure de l'élément annulaire (45) comporte au moins deux pattes (451) opposées l'une à l'autre et qui viennent radialement en saillie, ces pattes définissant la profondeur de pénétration dans le canal de passage (30) et, en position de montage, elles sont fixées axialement par le disque de couverture et de guidage (10).

10. Vanne selon au moins l'une des revendications précédentes,
**caractérisée en ce que**
l'extrémité des tiges (4) qui dépasse du canal de passage (30) comporte un segment d'extrémité (41) recourbé à 90° par rapport à la direction de passage de l'eau.

11. Vanne selon la revendication 10,
**caractérisée en ce que**
le segment d'extrémité (41) a une longueur correspondant à la longueur (43) de la tige (4).

12. Vanne selon au moins l'une des revendications précédentes,
**caractérisée en ce que**
les différentes tiges (4) sont reliées à une traverse (46).

13. Vanne selon la revendication 12,
**caractérisée en ce que**
la traverse (46) a une surface de section réalisée en fonction de la tige (4).

14. Vanne selon au moins l'une des revendications 10 à 13,
**caractérisée en ce que**
les segments d'extrémité (41) sont reliés à une entretoise périphérique (47).

15. Vanne selon la revendication 4,
**caractérisée en ce que**
la surface de section de l'entretoise (47) correspond à la surface de la section des segments d'extrémité (41).

16. Vanne selon au moins l'une des revendications précédentes,
dans laquelle le disque formant siège de vanne présente un orifice d'entrée en forme de segment annulaire, disposé sur un arc de cercle respectif pour l'eau froide et l'eau chaude de façon qu'avec le disque de commande, par le mouvement de rotation, on règle le rapport de mélange entre l'eau chaude et l'eau froide et par un mouvement radial, on définit le débit total,
**caractérisée en ce que**
dans la position de rotation du disque de commande (3) dans laquelle les sections d'ouverture des deux orifices d'entrée (20, 21) vers le canal de passage (30) sont de mêmes dimensions, entre les tiges (4), dans la région de la distance (25) la plus proche des deux orifices d'entrée (20, 21), il y a une pièce plate (48) dont la largeur (482) est supérieure ou égale à la distance (25) des deux orifices d'entrée (20, 21).

17. Vanne selon la revendication 16,
**caractérisée par**
deux pièces plates (48) qui se font face par rapport à l'axe de symétrie (5).

18. Vanne selon les revendications 16 ou 17,
**caractérisée en ce que**
l'épaisseur de la pièce plate (48) correspond au diamètre des tiges (4) et les surfaces latérales sont arrondies avec le même rayon.

19. Vanne selon l'une des revendications 16 à 18,
**caractérisée en ce que**
la zone d'extrémité extérieure de la pièce plate (48) présente un segment (480) replié à 90° ayant la même surface de section et par laquelle la pièce plate (48) est fixée à l'élément annulaire (45).

20. Vanne selon l'une des revendications 16 à 19,
**caractérisée en ce que**
l'extrémité de la pièce plate (48) venant radialement en saillie est sous la forme d'un segment d'extrémité (480) replié à 90° et ayant la même surface de section.

21. Vanne selon au moins l'une des revendications précédentes,
**caractérisée en ce que**
la pièce plate (48) avec les segments (480) et les segments d'extrémité (481) et/ou les tiges (4) et les segments (40) ainsi que les segments d'extrémité (41) avec l'élément annulaire (45) sont réalisés en matière plastique.
